# EUROPÄISCHE PATENTSCHRIFT

(11) **EP 0 503 444 B1**
(45) Veröffentlichungstag und Bekanntmachung des Hinweises auf die Patenterteilung: **14.06.1995**
(21) Anmeldenummer: 92103635.6
(22) Anmeldetag: 03.03.1992
(51) Int. Cl.: A01F 12/20, A01F 7/06

(54) **Dreschleisteneinheit für eine Dreschtrommel**
Beater plate for a threshing cylinder
Batte pour batteur cylindrique

(30) Priorität: 15.03.1991 US 669798
(43) Veröffentlichungstag der Anmeldung: 16.09.1992
(73) Patentinhaber: DEERE & COMPANY, Moline, Illinois 61265 (US)
(72) Erfinder: Coers, Bruce Alan, Hillsdale, Illinois 61257 (US)
(74) Vertreter: Feldmann, Bernhard

(56) Entgegenhaltungen:
- EP-A- 0 230 276
- EP-A- 0 244 862
- DE-A- 2 245 603
- DE-C- 83 132
- DE-C- 3 827 256
- US-A- 2 301 536
- US-A- 3 127 898
- US-A- 3 794 047
- SOVIET PATENTS ABSTRACTS Section PQ, Week 0285, 20. Februar 1985 DerwentPublications Ltd., London, GB; Class P12,

## Beschreibung

Die Erfindung betrifft Dreschleisteneinheiten für eine Dreschtrommel, eine Drescheinheit und eine Erntemaschine.

Die US-A-3,256,887 offenbart eine Dreschleisteneinheit, die auf einer einzigen Dreschleiste sowohl nach links als auch nach rechts gerichtete Rippen aufweist, wobei die Nahtstelle der unterschiedlich geneigten Rippen bei aufeinander folgenden Dreschleisteneinheiten nicht miteinander fluchten. Mit einer derartigen Anordnung soll das Erntegut besser erfaßt und nach einem Verschleiß an der einen Seite die Dreschleisteneinheit um 180° gedreht für eine weitere Dreschzeit verwendet werden können.

Die DE-A1-36 01 359 beschreibt einen Mähdrescher mit einer herkömmlich angeordneten Dreschtrommel und ein bzw. zwei dieser nachgeschalteten Dresch- bzw. Abscheidezylindern. Auf der Umfangsfläche der schnell umlaufenden Dreschtrommel sind Dreschleisten montiert, die mit den Leisten eines dazu nahezu konzentrisch angeordneten Dreschkorbs Körner aus den Ähren, Kolben oder Rispen einer Erntegutpflanze ausreiben. Herkömmlich sind zur Erhöhung der Reibarbeit die Dreschleisteneinheiten mit linken oder rechten Rippen versehen und abwechselnd auf dem Umfang der Dreschtrommel angebracht. Auf diese Weise wird eine ständige Wanderung des zu dreschenden Guts entlang der Drehachse der Dreschtrommel aufgrund der Seitwärtskomponente der Rippen vermieden. In dem Übergabebereich stromabwärts der Dreschtrommel befindet sich eine Leittrommel, die mit schräg zur Drehachse aufgesetzten Leitelementen bestückt ist. Die Leitelemente sind derart angeordnet, daß sie den von der Dreschtrommel ankommenden Erntegutstrom in Teilgutströme aufteilen, um das Erntegut in den Spalt zwischen den Rotoren und den Gehäusen der Dresch- bzw. Abscheidezylinder einzuspeisen.

Dieser Mähdrescher ist nachteilig, weil die Leittrommel erhebliche Kosten verursacht und viel Bauraum benötigt.

Die der Erfindung zugrunde liegende Aufgabe wird darin gesehen, eine Vorrichtung vorzuschlagen, mit der es möglich ist, das Erntegut ohne die Verwendung einer Leittrommel entsprechend zu führen
Diese Aufgabe wird erfindungsgemäß durch die Lehren jedes der Patentansprüche 1, 7 oder 9 gelöst, wobei in den weiteren Patentansprüchen Merkmale aufgeführt sind, die die Lösung in vorteilhafter Weise weiterentwickeln.

Auf diese Weise wird infolge der ständig wiederkehrenden seitwärts gerichteten Kraft das Dreschgut seitlich zur Nahtstelle bewegt. Aufgrund der stets in der gleichen Richtung geneigten Rippen bzw. Leitelemente bleibt die seitwärts gerichtete Komponente erhalten, so daß der Materialstrom entweder geteilt oder zusammengeführt wird. Diese Funktion ist eine Nebenwirkung des Dreschvorgangs, die dazu führt, daß es der Leittrommel nicht mehr bedarf.

Ist es erforderlich, mehrere Teilgutströme zu bilden, dann werden an mehreren Stellen einer parallel zu der Drehachse der Dreschtrommel verlaufenden Dreschleisteneinheit Bereiche mit Rippen unterschiedlicher Ausrichtung und somit entsprechend vielen Nahtstellen vorgesehen.

In einer ersten einfachen Art einer Ausbildung einer Dreschleisteneinheit, d. h. einer Dreschleiste mit wenigstens zwei Bereichen unterschiedlicher Rippenausrichtung, werden alle Rippen ungeachtet ihrer Ausrichtung in einen Grundkörper eingeschlagen oder sonstwie angeformt, so daß sich ein einziger Gegenstand ergibt.

In einer anderen Art werden stets gleiche Grundkörper, Segmente mit nach rechts und Segmente mit nach links gerichteten Zähnen entsprechend miteinander verbunden.

Die Ausrichtung der geneigten Rippen auf der Dreschleisteneinheit kann von der Naht aus sowohl divergierend als auch konvergierend erfolgen, um so der Form des Einlasses nachfolgender Komponenten, wie einer oder mehrerer axial wirkender Dresch- und/oder Trennzylinder Rechnung zu tragen. Es ist demnach möglich, das die Dreschtrommel verlassende Dreschgut nach außen in einen Spalt zwischen einem Rotor und einem Gehäuse einer Dresch- und/oder Trenneinheit oder zu deren Mittenachse zu lenken.

Eine sehr vorteilhafte Anwendung der vorbeschriebenen oder einer anderen Dreschleisteneinheit bietet sich bei einer Drescheinheit mit mehreren Dresch- und/oder Trenneinheiten, zwischen denen wenigstens ein Übergangsbereich gegeben ist, in dem das Dreschgut in einer bestimmten Weise geführt werden muß, was z. B. mittels der Ausrichtung der Rippen gewährleistet werden kann. Andererseits können auch auf der Dreschleisteneinheit zusätzliche Führungsmittel, z. B. Stege, vorgesehen werden.

Die Verwendung der erfindungsgemäßen Dreschleisteneinheit in einer Erntemaschine, wie einem Mähdrescher, einem Maisdrescher oder dergleichen bewirkt eine gute Dreschgutführung ohne zusätzliche Leitelemente bei geringem Bauraum, so daß entweder die Außenabmessungen des Mähdreschers gering gehalten werden können oder der Bauraum anderen Komponenten zur Verfügung steht.

In der Zeichnung ist ein nachfolgend näher beschriebenes Ausführungsbeispiel der Erfindung dargestellt. Es zeigt:
- Fig. 1: eine Erntemaschine mit einer erfindungsgemäßen Dreschleisteneinheit in Seitenansicht,
- Fig. 2: einen Dresch- und Abscheidebereich der Erntemaschine in Seitenansicht und
- Fig. 3: den Dresch- und Abscheidebereich mit der erfindungsgemäßen Dreschleisteneinheit in Draufsicht.

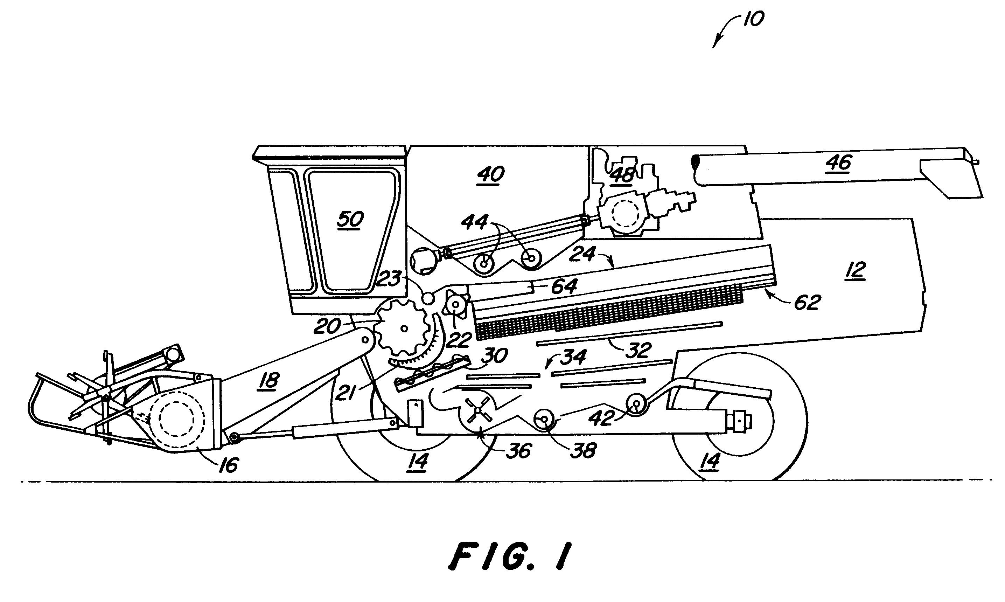

Figur 1 zeigt eine selbstfahrende Erntemaschine 10 in der Art eines Mähdreschers mit einem Chassis 12, das sich auf dem Boden über Räder 14 abstützt und von diesen fortbewegt wird. Die Räder 14 werden auf nicht gezeigte Weise über ein Getriebe und einen Motor angetrieben, um die Erntemaschine 10 über das Feld zu bewegen. An den vorderen Endbereich der Erntemaschine 10 ist eine Erntebergungsvorrichtung 16 in der Art eines Schneidwerks angeschlossen, um auf dem Feld stehendes Erntegut aufzunehmen und anschließend durch ein Fördergehäuse 18 nach oben einer Dresch- und Abscheidevorrichtung zuzuleiten. Die Dresch- und Abscheidevorrichtung enthält eine Dreschtrommel 20 und einen dieser zugeordneten Dreschkorb 21, denen das Erntegut zunächst zugeführt wird. Anschließend wird das ausgedroschene Erntegut einer Abstreifrolle 23 und einer Wendetrommel 22 aufgegeben, von denen aus es in eine axial wirkende, abscheidende Verarbeitungseinheit 24 gelangt.

Körner, Kurzstroh und Spreu, die aus der Trenn- und Abscheidevorrichtung abgegeben werden, fallen auf einen Schneckenförderer 30 und einen Schüttelboden 32, die sie jeweils einem Siebkasten 34 aufgeben. Dem Siebkasten 34 wird von einem Gebläse 36 Luft zugeführt, um eine Trennung der Körner von den übrigen Bestandteilen durchzuführen. Gereinigtes Getreide wird mittels einer Körnerschnecke 38 einem nicht gezeigten Elevator zugeführt, der es wiederum zu einem Korntank 40 fördert. Eine Überkehrschnecke 42 liefert nicht ausgedroschene Ährenstücke mittels eines weiteren nicht gezeigten Elevators zurück an die Dreschvorrichtung. Das gereinigte Getreide wird aus dem Korntank 40 durch ein Entladesystem entfernt, das eine Querschnecke 44 und ein Entleerrohr 46 enthält.

Die verschiedenen zuvor aufgezählten Komponenten werden mittels eines Verbrennungsmotors 48 angetrieben und von einer Fahrerkabine 50 aus von einem Fahrer bedient. Die Dreschvorrichtung, die Verarbeitungseinheit 24 und der Siebkasten 34 sind in einem Raum zwischen den Wänden des Chassis 12 untergebracht.

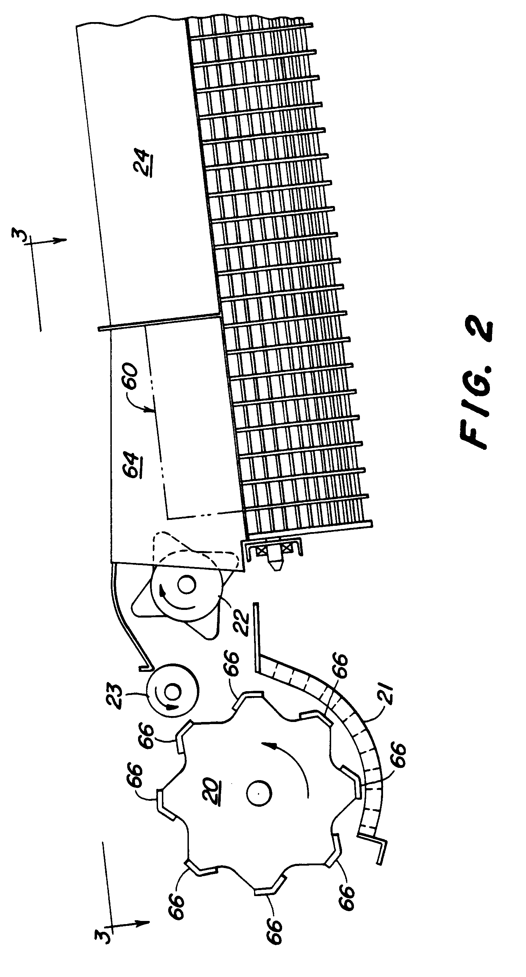

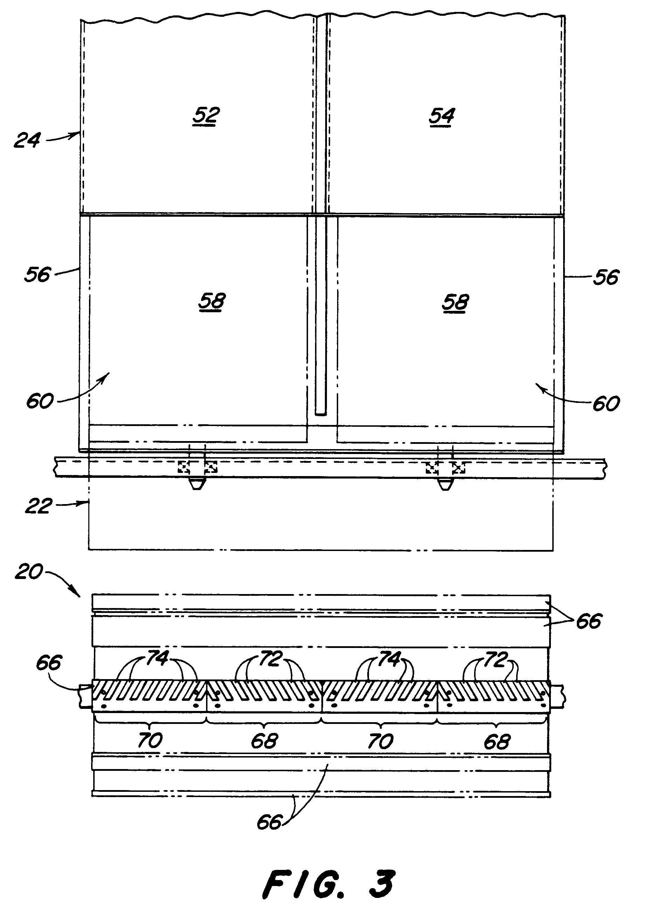

Wie in den Figuren 2 und 3 gezeigt ist, enthält die Verarbeitungseinheit 24 ein Paar nebeneinander angeordneter Axialtrenneinheiten 52 und 54, die jeweils ein zylindrisches, rohrförmiges Gehäuse 56, einen mit Zähnen, Leisten, Zinken oder dergleichen bestückten Rotor 58 innerhalb des Gehäuses 56, einen Einlaß 60 und einen Auslaß 62 enthalten.

Die Wendetrommel 22 führt das geerntete und bereits gedroschene Gut gemeinsam mit einem aus Blech geformten Einlaufgehäuse 64 zu den Einlässen 60 jeder Axialtrenneinheit 52, 54. Die vorliegende Erfindung dient dazu, das Dreschgut bei diesem Ausführungsbeispiel in zwei Teilgutströme aufzuteilen, die während des Dreschvorgangs nach den Einlässen 60 ausgerichtet sind.

Die Dreschtrommel 20 ist mit einer Vielzahl quer zur Fahrtrichtung der Erntemaschine und Förderrichtung der Dreschtrommel 20 ausgerichteter Dreschleisteneinheiten 66 bestückt, die auf ihrem Umfang gleichmäßig verteilt angeordnet sind. Wie aus Figur 3 zu erkennen ist, hat in diesem Ausjede Dreschleisteneinheit 66 vier Bereiche 68, 70 unterschiedlicher Ausführung, davon zwei mit Linksausrichtung 68 und zwei mit Rechtsausrichtung 70. Es wird darauf hingewiesen, daß zur Wahrung der Übersichtlichkeit in Figur 3 die Wendetrommel 22, die Abstreifrolle 23 und das Einlaufgehäuse 64 nicht dargestellt sind.

Während des Dreschvorgangs ziehen bzw. drängen die Rippen 72 der Bereiche 68 mit Linksausrichtung das Dreschgut nach rechts, während Rippen 74 der Bereiche 70 mit Rechtsausrichtung dazu tendieren, das Dreschgut nach links zu bewegen. Infolge der abwechselnden Anordnung der Bereiche 68 und 70 unterschiedlicher Ausrichtung, wie sie in Figur 3 gezeigt ist, wird das Dreschgut zu zwei Gutströmen zusammengeführt bzw. aufgeteilt, die nach den Eingängen 60 der Axialtrenneinheiten 52, 54 ausgerichtet sind.

Die vorbeschriebene Erfindung ist insbesondere, aber nicht ausschließlich bei sogenannten Hybrid-Mähdreschern anwendbar, d. h. bei Erntemaschinen, bei denen auf eine quer zur Förderrichtung angeordnete Dreschtrommel ein oder mehrere Axialtrenneinheiten folgen.

Anstatt der vorbeschriebenen Ausführungsform sind auch andere Lösungen denkbar, die eine Dreschgutführung mittels Dreschleisteneinheiten oder Dreschleisten bewirken. Insbesondere kann die Dreschtrommel 20 mit Zähnen bestückt sein, die in einer bestimmten Richtung ausgerichtet sind. Zudem können auf den Dreschleisten Leitbleche vorgesehen sein, die zwischen die Rippen eingefügt sind. Möglich sind auch Dreschleisteneinheiten mit Segmenten, die nicht parallel zu der Drehachse der Dreschtrommel 20, sondern zu dieser in einem geringen Winkel angeordnet sind.

## Patentansprüche

1. Dreschleisteneinheiten (66) für eine Dreschtrommel (20), wobei jede Dreschleisteneinheit (66) Bereiche (68, 70) mit nach links und nach rechts gerichteten Rippen (72, 74) aufweist, die an zwischen ihnen gelegenen Nahtstellen aufeinander treffen, dadurch gekennzeichnet, daß in der Umfangsrichtung die Nahtstellen von auf dem Umfang der Dreschtrommel (20) verteilten, aufeinanderfolgenden Dreschleisteneinheiten (66) miteinander fluchten und stets Bereiche (68, 70) mit gleich gerichteten Rippen (72, 74) aufeinander folgen.

2. Dreschleisteneinheiten nach Anspruch 1, dadurch gekennzeichnet, daß eine Dreschleisteneinheit (66) mehrere Paare von Bereichen (68, 70) mit unterschiedlich ausgerichteten Rippen (72, 74) aufweist.

3. Dreschleisteneinheiten nach Anspruch 1 oder 2, dadurch gekennzeichnet, daß die unterschiedlich ausgerichteten Rippen (72, 74) an einer Dreschleiste angeformt sind.

4. Dreschleisteneinheiten nach Anspruch 1 oder 2, dadurch gekennzeichnet, daß die Rippen (72, 74) auf mit einem Grundkörper verbindbaren Segmenten angebracht sind.

5. Dreschleisteneinheiten nach einem oder mehreren der vorherigen Ansprüche, dadurch gekennzeichnet, daß die Rippen (72, 74) von der Nahtstelle aus divergieren.

6. Dreschleisteneinheiten nach einem oder mehreren der vorherigen Ansprüche 1 bis 4, dadurch gekennzeichnet, daß die Rippen (72, 74) von der Nahtstelle aus konvergieren.

7. Drescheinheit mit einer Dreschgut tangential abgebenden Dreschtrommel (20) und wenigstens einer dieser nachgeschalteten Axialtrenneinheit (52, 54), dadurch gekennzeichnet, daß die Dreschtrommel (20) mit Dreschleisteneinheiten (66) nach einem oder mehreren der vorherigen Patentansprüche bestückt ist, die derart ausgebildet und/oder angeordnet sind, daß sie eine in Axialrichtung der Dreschtrommel (20) gerichtete Teilung oder Zusammenführung des Dreschgutstroms bewirken

8. Drescheinheit nach Anspruch 7, dadurch gekennzeichnet, daß Nahtstellen zwischen Bereichen (68, 70) unterschiedlich ausgerichteter Rippen (72, 74) der Dreschleisteneinheiten (66) in der Ebene der Drehachse(n) der nachfolgenden Axialtrenneinheit(en) (52, 54) liegen.

9. Erntemaschine, insbesondere Mähdrescher, mit einer quer zur Fahrtrichtung angeordneten Dreschtrommel (20) und zwei davon stromabwärts, parallel zueinander und sich in der Längsrichtung der Erntemaschine erstreckend angeordneten Axialtrenneinheiten (52, 54), wobei auf der Dreschtrommel (20) umfangsmäßig verteilt Dreschleisteneinheiten (66) angeordnet sind, die nach links und nach rechts gerichtete Leitelemente, insbesondere Rippen (72, 74) aufweisen, dadurch gekennzeichnet, daß die Nahtstellen zwischen den unterschiedlichen aber in sich gleich ausgerichteten Leitelementebereichen in der Umfangsrichtung und die Drehachse der jeweiligen Axialtrenneinheit (52, 54) in der gleichen Ebene liegen.

## Claims

1. Beater bar units (66) for a threshing drum (20), wherein regions (68, 70) with ribs (72, 74) directed to the left and right are provided on each beater bar unit (66) and meet at joint sites therebetween, characterized in that the joint sites of beater bar units (66) distributed round the circumference of the threshing drum (20) and following one another are lined up with each other in the circumferential direction and regions (68, 70) with like directed ribs (72, 74) always follow one another.

2. Beater bar units according to claim 1, characterized in that a beater bar unit (66) has a plurality of pairs of regions (68, 70) with differently directed ribs (72, 74).

3. Beater bar units according to claim 1 or 2, characterized in that the differently directed ribs (72, 74) are formed on one beater bar.

4. Beater bar units according to claim 1 or 2, characterized in that the ribs (72, 74) are applied to segments which can be connected to a base member.

5. Beater bar units according to one or more of the preceding claims, characterized in that the ribs (72, 74) diverge from the joint site.

6. Beater bar units according to one or more of the preceding claims 1 to 4, characterized in that the ribs (72, 74) converge from the joint site.

7. A threshing unit with a threshing drum (20) delivering threshed material tangentially and at least one axial separating unit (52, 54) following the threshing drum, characterized in that the threshing drum (20) is fitted with beater bar units (66) according to one or more of the preceding claims, the units being so formed and/or arranged that effect a distribution or guiding together of the threshed material stream, in the axial direction of the threshing drum (20).

8. A threshing unit according to claim 7, characterized in that the joint sites between regions (68, 70) with differently directed ribs (72, 74) of the beater bar units (66) lie in the plane of the axis/axes of rotation of the following axial separating unit(s) (52, 54).

9. A harvesting machine, especially a combine harvester, with a threshing drum (20) arranged transverse to the direction of travel and two axial separating units (52, 54) extending parallel to one another in the longitudinal direction of the harvesting machine, downstream of the threshing drum, wherein circumferentially distributed beater bar units (66) are arranged on the threshing drum (20) and comprise guide members, especially ribs (72, 74) directed to the left and the right, characterized in that the joint sites between the differently but in themselves like directed guide member regions lie in the circumferential direction and in the plane of the axes of rotation of the axial separating units (52, 54).

## Revendications

1. Battes (66) pour un cylindre batteur (20), dans lequel chaque batte (66) comporte des parties (68, 70) équipées de nervures dirigées vers la gauche et de nervures dirigées vers la droite (72,74), qui se rejoignent au niveau de zones de jonction situées entre elles, caractérisées en ce que dans la direction circonférentielle, les zones de jonction de battes successives (66), qui sont réparties sur la périphérie du cylindre batteur (20), sont alignées les unes sur les autres et que des parties (68,70) possédant des nervures (72,74) dirigées dans le même sens, se succèdent en permanence.

2. Battes selon la revendication 1, caractérisées en ce qu'une batte (66) comporte plusieurs couples de parties (68,70) ayant des nervures (72,74) orientées différemment.

3. Battes selon la revendication 1 ou 2, caractérisées en ce que les nervures (72,74) orientées différemment sont formées sur une batte.

4. Battes selon la revendication 1 ou 2, caractérisées en ce que les nervures (72,74) sont disposées sur des segments pouvant être réunis à un corps de base.

5. Battes selon une ou plusieurs des revendications précédentes, caractérisées en ce que les nervures (72,74) divergent à partir de la zone de jonction.

6. Battes selon une ou plusieurs des revendications 1 à 4, caractérisées en ce que les nervures (72,74) convergent à partir de la zone de jonction.

7. Batteur comportant un cylindre batteur (20), qui délivre tangentiellement une matière à battre, et au moins une unité de séparation axiale (52,54) disposée en aval de ce cylindre batteur, caractérisé en ce que le cylindre batteur (20) est équipé de battes (66) selon une ou plusieurs des revendications précédentes et qui sont agencées et/ou disposées de telle sorte qu'elles réalisent une séparation ou une réunion, dirigée dans la direction axiale du cylindre batteur (20), du courant de la matière à battre.

8. Batteur selon la revendication 7, caractérisé en ce que les zones de jonction entre les parties (68,70) comportant des nervures (72,74) orientées différemment, des battes (66) sont situées dans le plan du ou des axes de rotation de la ou des unités de séparation axiale suivantes (52,54).

9. Moissonneuse, notamment moissonneuse-batteuse, comportant un cylindre batteur (20) disposé transversalement par rapport à la direction de déplacement, et deux unités de séparation axiale (52,54), qui sont situées en aval du cylindre batteur et sont parallèles entre elles et s'étendent dans la direction longitudinale de la moissonneuse, et des battes (66) disposées en étant réparties sur la circonférence du cylindre batteur (20) et qui comportent des éléments de guidage orientés vers la gauche et vers la droite, notamment des nervures (72,74), caractérisée en ce que les zones de jonction entre les parties, orientées différemment, en soi de la même manière, des éléments de guidage sont situées dans le plan des axes de rotation des unités de séparation axiale (52,54).
